# EUROPEAN PATENT SPECIFICATION

(11) **EP 2 754 865 B1**
(45) Date of publication and mention of the grant of the patent: **06.07.2016**
(21) Application number: 11871889.9
(22) Date of filing: 09.09.2011
(51) Int. Cl.: F01N 3/08, B01D 53/94, F01N 3/20, F01N 3/24, F02B 67/00, F01N 13/10, F02B 37/00, F01N 13/00, F01N 3/28

(54) **EXHAUST GAS PURIFYING APPARATUS**
ABGASREINIGUNGSVORRICHTUNG
APPAREIL DE PURIFICATION DE GAZ D'ÉCHAPPEMENT

(43) Date of publication of application: 16.07.2014
(73) Proprietor: Hitachi Zosen Corporation, Osaka-shi, Osaka 559-8559 (JP)
(72) Inventor: BABA, Shinji, Osaka-shi Osaka 559-8559 (JP)
(74) Representative: Hoffmann Eitle
(86) International application number: PCT/JP2011/070613
(87) International publication number: WO 2013/035199

(56) References cited:
- EP-A1- 0 468 919
- EP-A1- 2 527 611
- DE-C1- 19 745 068
- JP-A- H0 650 133
- JP-A- S5 644 412
- JP-A- H04 232 324
- JP-A- 2002 221 024
- JP-A- 2005 083 220
- JP-A- 2006 283 604
- JP-A- 2011 220 280

## Description

### TECHNICAL FIELD

The present invention relates to an exhaust gas emission purifying device which reduces and removes a nitrogen oxide (NOx) in an exhaust gas emission discharged from an internal combustion engine, by reacting it with a reducing agent it in the presence of a denitration catalyst in a reaction such as an SCR (Selective Catalytic Reduction).

### BACKGROUND ART

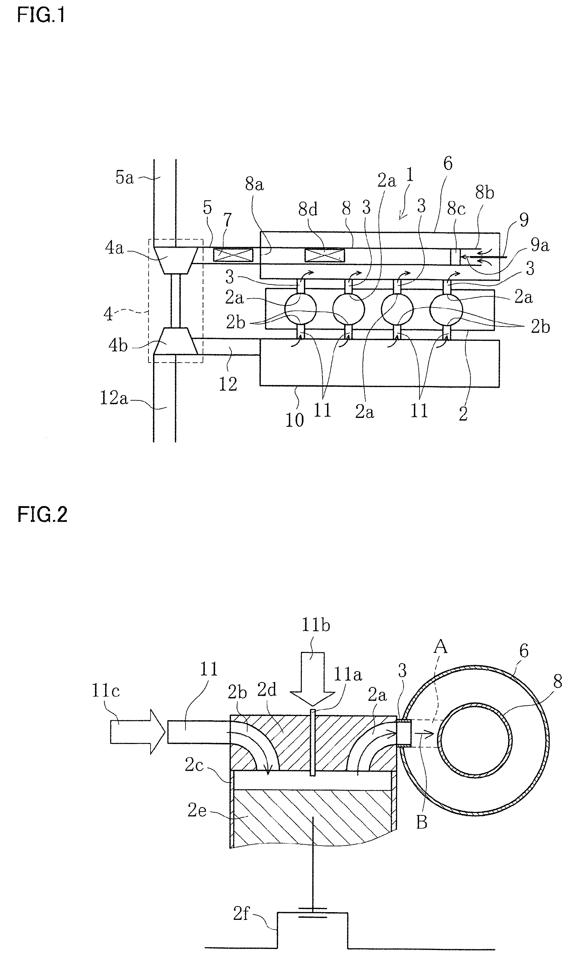

In the past, a technology was employed for detoxifying exhaust gas by providing a denitration reactor which employs a denitration catalyst such as an SCR catalyst downstream of an exhaust pipe of a diesel engine, and by providing a nozzle upstream of the denitration reactor for spraying an aqueous solution of a reducing agent composition containing high-concentration urea and low-concentration ammonia into the exhaust gas so as to break down NOx in the exhaust gas into nitrogen and water in the denitration reactor (e.g., see FIG. 1 of Patent Reference 1).

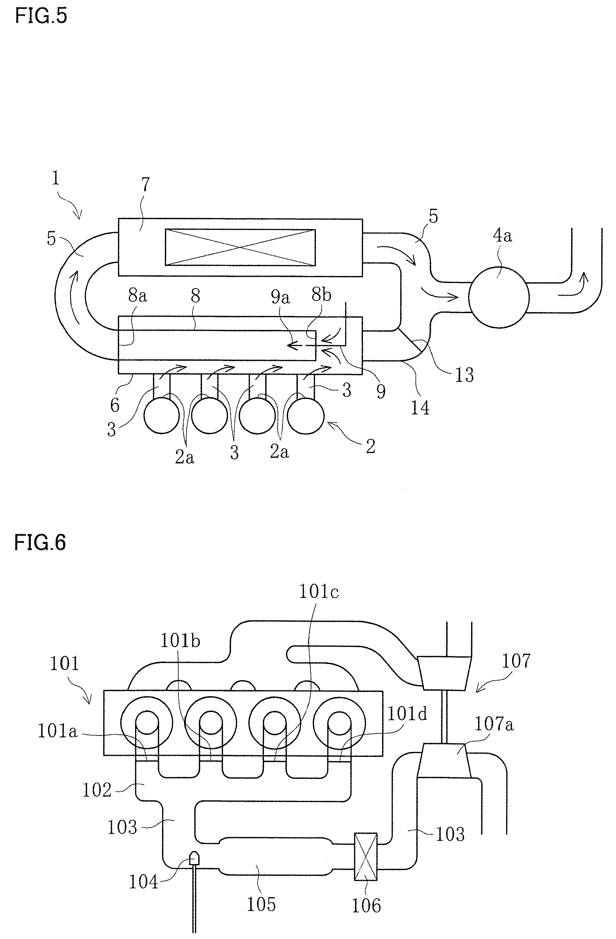

Moreover, FIG. 6 illustrates a prior art example of a 4-cylinder diesel engine 101 for a ship which is provided with an exhaust manifold 102 leading to an exhaust pipe 103 which collects exhaust gas emitted from exhaust ports 101a, 101b, 101c, and 101d.

In addition, the exhaust pipe 103, which is disposed between the exhaust manifold 102 and a turbine 107a of a turbocharger 107, is provided with a supply nozzle 104 which sprays an aqueous solution of a reducing agent such as ammonia or an aqueous solution of a reducing agent precursor such as urea into the exhaust gas, and an evaporation tube 105 for forming a reducing agent such as ammonia gas by vaporizing or hydrolyzing the aqueous solution of the reducing agent or reducing agent precursor sprayed from the nozzle 104, and an SCR catalyst 106 which reduces the NOx in the exhaust gas by selectively reacting it with the reducing agent so as to purify it.
The reason why the installation position of the SCR catalyst 106 is upstream of the turbine 107a is because a position downstream of the turbine 107a is disadvantageous for catalytic performance, due to the fact that the temperature of the exhaust gas decreases on the downstream side of the turbine 107a.
However, in a configuration in which the SCR catalyst 106 is provided upstream of turbine 107a of the turbocharger 107 in an exhaust system of the diesel engine 101 in which the exhaust manifold 102 takes up a large space, it is also necessary to install the evaporation tube 105 and the SCR catalyst 106. As a result, there was a problem in that the space efficiency was poor, because these devices took up a significant space in the engine room.
Moreover, if the fuel contains sulfur compounds, then SO₂ is formed in the exhaust gas, and when an aqueous solution of ammonia or urea is sprayed from the nozzle 104, if the temperature of the evaporation tube 105 is low, then intermediates such as such as ammonium sulfate ((NH₄)₂SO₄), ammonium hydrogen sulfate (NH₄HSO₄), and the like are formed, so there is a problem that these intermediates are adsorbed onto the SCR catalyst 106, causing a decrease in catalytic performance.
The problem of the decrease in the catalytic performance of the SCR catalyst due to the adsorption of intermediates readily occurs particularly in diesel engines of ships, because of the use of fuels such as light oil or heavy oil, which contain greater quantities of sulfur than gasoline.
EP 2 527 611 A1 discloses a device and method for treating waste gas. The device has an elongated exhaust gas manifold with inlets for receiving exhaust gas from a large diesel engine. The exhaust gas manifold and a catalyst container are arranged parallel to each other and separated from each other by a partition wall extending along longitudinal direction. The exhaust gas manifold is connected with the catalyst container over passages, which are provided in the partition wall, to guide the exhaust gas to an outlet during operation of the device by catalyst elements. However, EP 2 527 611 A1 does not disclose the characterizing portion of Claim 1.

### PRIOR ART REFERENCES

### PATENT REFERENCES

Patent Reference 1: Japanese Patent Application Kokai Publication No. 2003-260331

### SUMMARY OF THE INVENTION

According to the present invention, there is provided an exhaust gas emission purifying device according to Claim 1.

### PROBLEMS TO BE SOLVED BY THE INVENTION

The problems which the present invention aims to solve is that in an exhaust gas emission purifying device according to the prior art, the space efficiency was poor because the exhaust manifold and the evaporation tube took up a large space, and in cases where the fuel contained sulfur compounds, intermediates such as ammonium sulfate and/or acidic ammonium sulfate are formed and adsorbed onto the SCR catalyst, causing a decrease in catalytic performance.

### MEANS FOR SOLVING THESE PROBLEMS

The exhaust gas emission purifying device according to the present invention comprises, as its most essential features:
an exhaust manifold which collects an exhaust gas discharged from exhaust connection pipes connected to exhaust ports of an engine, and which leads the exhaust gas into an exhaust passageway upstream of a turbine of a turbocharger;
a denitration catalyst apparatus disposed in the exhaust passageway;
an evaporation tube provided inside of the exhaust manifold, the evaporation tube having one end connected to the exhaust passageway and the other end opening into the exhaust manifold, and comprising a flow regulator configured to regulate the flow of exhaust gas within the evaporation tube and a static mixer; and
a nozzle that sprays an aqueous solution containing at least one of a reducing agent and a reducing agent precursor into the exhaust gas as it passes through the evaporation tube.

### ADVANTAGEOUS EFFECTS OF THE INVENTION

The exhaust gas emission purifying device according to the present invention can be produced in a more compact size, because the evaporation tube is provided inside the exhaust manifold. In addition, in the exhaust gas emission purifying device according to the present invention, because the wall surface of the evaporation tube is sufficiently heated by the high-temperature exhaust gas immediately after it is discharged from the exhaust connection pipe, the exhaust gas is not cooled by the wall surface of the evaporation tube, thus making it possible to prevent the formation of intermediates such as ammonium sulfate and/or acidic ammonium sulfate, even if the fuel contains a large quantity of sulfur compounds. Therefore, according to the present invention, it is possible to prevent the adsorption of intermediates onto the denitration catalyst apparatus, thus making it possible to advantageously maintain the catalytic performance.

### BRIEF DESCRIPTION OF THE DRAWINGS

FIG. 1 is a schematic drawing showing the over-all structure of the exhaust gas emission purifying device according to the present invention.
FIG. 2 is a schematic drawing showing a vertical sectional view of an exhaust manifold with an evaporation tube included therein, as well as the vicinity of a cylinder head of an engine appearing in FIG. 1.

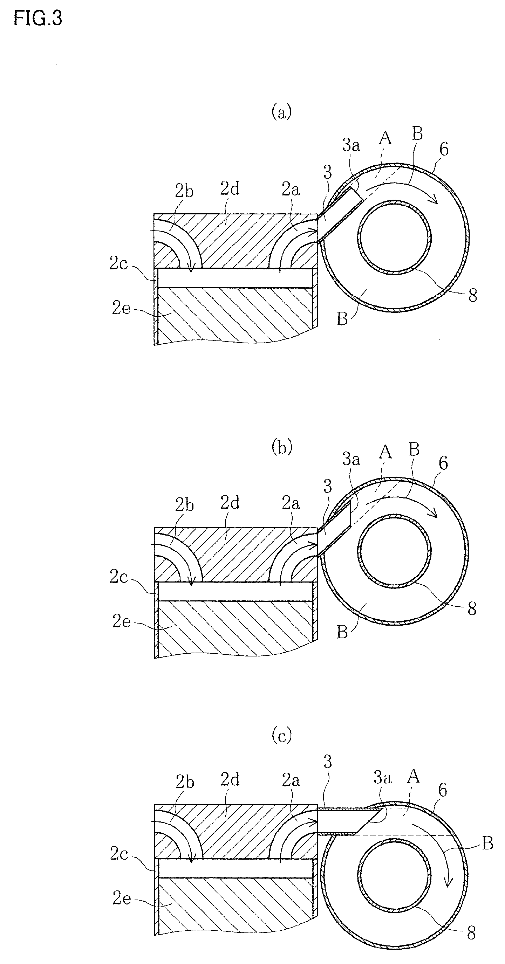

FIG. 3 is a drawing illustrating another example in which an exhaust connection pipe is disposed facing a direction in which the evaporation tube is not present within a zone in which the exhaust connection pipe is extended in the discharge direction of the exhaust gas. FIG. 3 (a) and (b) show the structure of a case where a discharge orifice of the exhaust connection pipe faces upwards. FIG. 3 (c) shows the structure of a case where the exhaust connection pipe is disposed in a horizontal orientation, and the center of the evaporation tube is shifted to a position lower than the position of the center of the exhaust connection pipe.
FIG. 4 is a drawing illustrating another example in which exhaust connection pipes are arranged in a direction inclined toward the open end side of the evaporation tube, from a direction which is perpendicular to the lengthwise direction of the evaporation tube. FIG. 4 (a) illustrates a configuration in which the exhaust connection pipes are positioned on the side of the evaporation tube. FIG. 4 (b) illustrates a configuration in which the discharge orifices of the exhaust connection pipes are disposed in an upward position in the evaporation tube.
FIG. 5 is a drawing illustrating the configuration of another example, in which a switching valve is provided in order to perform a bypass so that exhaust gas is not fed to the denitration catalyst apparatus when denitration treatment is not necessary.
FIG. 6 is a schematic drawing of a configuration of a conventional diesel engine of a ship.

### EMBODIMENTS OF THE INVENTION

The objects of the present invention, which are to conserve space in an exhaust gas emission purifying device, and also to prevent a decrease in catalytic performance due to the adsorption of intermediates such as ammonium sulfate and/or acidic ammonium sulfate if the fuel contains sulfur compounds, are achieved by means of an exhaust gas emission purifying device provided with an exhaust manifold which collects an exhaust gas discharged from exhaust connection pipes connected to exhaust ports of an engine, and which leads the exhaust gas into an exhaust passageway upstream of a turbine of a turbocharger; a denitration catalyst apparatus disposed in the exhaust passageway; an evaporation tube inside of the exhaust manifold, having one end connected to the exhaust passageway, and the other end opening into the exhaust manifold; as well as a nozzle which sprays at least one of an aqueous solution containing a reducing agent and a reducing agent precursor into the exhaust gas as it passes through the evaporation tube.

In a case where the exhaust gas emission purifying device according to the present invention is configured with the exhaust connection pipes arranged facing a direction in which the evaporation tube is not present within a zone in which the exhaust connection pipe is extended in the discharge direction of the exhaust gas, it is advantageous for a high-temperature exhaust gas discharged from the exhaust connection pipe to circulate towards the periphery of the evaporation tube within the exhaust manifold without directly touching the evaporation tube, so that the entire outer periphery of the evaporation tube is efficiently heated, rather than heating the evaporation tube from the one side which faces the discharge orifice of the exhaust connection pipe.

In a case where the exhaust gas emission purifying device according to the present invention is configured with the exhaust connection pipes arranged in a direction inclined toward the open side, from a direction perpendicular to the lengthwise direction of the evaporation tube, it is advantageous for a high-temperature exhaust gas discharged from the exhaust connection pipe to circulate towards the open end side on the outside of the evaporation tube, so that the exhaust gas within the exhaust manifold circulates while heating the entire length of the evaporation tube.

Moreover, in a case where the exhaust gas emission purifying device according to the present invention is configured with the exhaust connection pipes arranged facing a direction in which the evaporation tube is not present within a zone in which the exhaust connection pipes are extended in the discharge direction of the exhaust gas, and with the exhaust connection pipes arranged in a direction inclined toward an open end side, from a direction perpendicular to the lengthwise direction of the evaporation tube, it is most advantageous for a high-temperature exhaust gas discharged from the exhaust connection pipe to circulate in a helical manner towards the open end side of the evaporation tube on the outside of the evaporation tube, so that the exhaust gas more favorably circulates within the exhaust manifold, while efficiently heating the entire periphery and the entire length of the evaporation tube.

Various examples of the present invention are described in detail below, with reference being made to FIGS. 1-5. In FIG. 1, Reference Numeral 1 is an exhaust gas emission purifying device according to the present invention used in a 4-cylinder diesel engine for a ship. The exhaust gas emission purifying device 1 is provided with an exhaust manifold 6 which collects an exhaust gas discharged from exhaust connection pipes 3 which are respectively connected to exhaust ports 2a provided to cylinder heads of an engine 2, and which leads the exhaust gas into an exhaust passageway 5 upstream of a turbine 4a of a turbocharger 4, and a denitration catalyst apparatus 7 which is installed in the exhaust passageway 5. Reference Numeral 5a is an exhaust passageway downstream of the turbine 4a, and 4b is a compressor of the turbocharger 4 which compresses air fed from an intake passageway 12a. Reference Numeral 10 is an intake manifold which distributes compressed air fed from an intake passageway 12 to an intake port 2b of a cylinder of the engine 2 via an intake connection pipe 11.

Inside of the exhaust manifold 6 there is provided an evaporation tube 8 of which one end 8a is connected to the exhaust passageway 5 and the other end 8b opens into the exhaust manifold 6. In addition, a nozzle 9 is provided in a position in which it is able to spray an aqueous urea 9a in the vicinity of the open end 8b of the evaporation tube 8 into the exhaust gas which passes through the interior of the evaporation tube 8 after being discharged from the discharge orifices of the exhaust connection pipes 3.

In the denitration catalyst apparatus 7 there is provided an SCR catalyst which selectively reduces and removes NOx which causes environmental pollution such as acid rain and photochemical smog, when it is in exhaust gas discharged from the engine 2. The SCR catalyst may be any desired catalyst, such as a metal oxide-based catalyst such as alumina, zirconia, vanadia/titania, or the like, or a zeolite-based catalyst, and these catalysts may be used in combination. The SCR catalyst may be supported on a catalyst carrier having a honeycomb structure, and it may be inserted into a cylindrical cage.

If the SCR catalyst is used to break down NOx in exhaust gas into nitrogen and water, so as to detoxify it, a reducing agent such as ammonia must be supplied to the exhaust gas on the upstream side, but there is a risk involved in storing aqueous ammonia inside a ship. Therefore, in this example, urea is stored in the form of an aqueous solution to serve as a reducing agent precursor in a tank (not pictured) which is connected to the nozzle 9. Then, during operation, the aqueous urea 9a is sprayed from the nozzle 9 into the evaporation tube 8, the heat of the evaporation tube 8 is used in hydrolyzing the urea, to form ammonia.

The evaporation tube 8 is a tube-shaped member, of which the one end 8a is connected to the exhaust passageway 5, and the other end 8b opens into the exhaust manifold 6. According to the exhaust gas emission purifying device of this example, the nozzle 9 is provided for spraying the aqueous urea 9a in the vicinity of the open end 8b, and a flow regulator 8c is provided downstream of the nozzle 9 to regulate the flow of exhaust gas within the evaporation tube 8. The exhaust gas emission purifying device 1 of this example is also provided with a static mixer 8d downstream of the flow regulator 8c to thoroughly mix the exhaust gas and the ammonia gas formed when the aqueous ammonia 9a sprayed from the nozzle 9 is hydrolyzed inside the evaporation tube 8.

Therefore, according to the exhaust gas emission purifying device 1 of the example illustrated in FIG. 1, because the entire evaporation tube 8 equipped with the flow regulator 8c and the static mixer 8d is installed within the exhaust manifold 6, the device according to the present invention is designed to have a more compact size than the device of the prior art in which the exhaust manifold and the evaporation tube were both disposed in the exhaust passageway 5 upstream of the turbine 4a.

It should be noted that generally, in the case of an engine 2 provided with a turbocharger 4, control delays can result from transient responses due to intake delays if the turbocharger 4 fails to respond to an increase in output demand from the engine 2 during a transient state such as acceleration. However, in the present invention, exhaust control is readily achieved, because the route of the exhaust gas to the turbocharger 4 can be made shorter than in the prior art device, in which the exhaust manifold and the evaporation tube were both disposed in the exhaust passageway 5 upstream of the turbine 4a.

Moreover, in the example illustrated in FIG. 1, the evaporation tube 8 is installed within the exhaust manifold 6 in such a manner that the lengthwise direction of the evaporation tube 8 is parallel to the direction in which the discharge orifices of the exhaust connection pipes 3 are serially arranged so as to face each of the respective discharge orifices of the exhaust connection pipes connected to the exhaust ports 2a of each of the cylinders of the engine 2. It is therefore possible to inhibit the formation of intermediates such as ammonium sulfate and/or acidic ammonium sulfate which cause a decrease in performance of the denitration catalyst apparatus 7, and also to favorably support the NOx purifying performance of the SCR catalyst, even if the fuel contains a large quantity of sulfur compounds, because the wall surface of the evaporation tube 8 is heated high-temperature exhaust gas immediately after being discharged from the exhaust connection pipes 3.

Following is a description of the positional relationship between the evaporation tubes 8 and the discharge orifices of the exhaust connection pipes 3 which open into the exhaust manifold 6, as well as the direction in which the exhaust connection pipes 3 are oriented. FIG. 2 is a drawing showing a vertical sectional view of the exhaust manifold 6 with the evaporation tube 8 included therein, as well as the vicinity of a cylinder head of an engine 2 appearing in FIG. 1. Reference Numeral 2d is a cylinder head provided with the exhaust port 2a and the intake port 2b. Reference Numeral 2c is a cylinder block provided with a cylinder liner. Reference Numeral 2e is a piston connected to a crank 2f. An arrow 11b indicates the direction in which fuel is supplied from a fuel spray nozzle 11a by directly spraying it into the cylinders, and an arrow 11c indicates the direction in which compressed air is introduced by means of the compressor 4b of the turbocharger 4.

In the example shown in FIG. 2, the exhaust connection pipe 3 is installed facing the center of the evaporation tube 8, with the center of the exhaust connection pipe 3 and the center of the evaporation tube 8 being positioned at the same height. In this case, the evaporation tube 8 is present within a zone in which the exhaust connection pipe 3 is extended in the discharge direction of the exhaust gas (within the zone enclosed by the dotted line indicated by A in the drawing).

Therefore, in a configuration of the type illustrated in FIG. 2, exhaust gas discharged from the discharge orifice of the exhaust connection pipe 3 makes direct contact with the evaporation tube 8 as shown by an arrow B, after which it separates vertically and proceeds to the back side of the evaporation tube 8.

By contrast, in the examples illustrated in FIGS. 3 (a) and 3 (b), the discharge orifice 3a of the exhaust connection pipe 3 is disposed facing upwards. In this case, the evaporation tube 8 is not present within a zone in which the exhaust connection pipe 3 is extended in the discharge direction of the exhaust gas (within the zone enclosed by the dotted line indicated by A in the drawing).

In the example illustrated in FIG. 3 (c), the exhaust connection pipe 3 is disposed in a horizontal orientation, and the center of the evaporation tube 8 is shifted to a position lower than the position of the center of the exhaust connection pipe 3. In this case as well, the evaporation tube 8 is not present within a zone in which the exhaust connection pipe 3 is extended in the discharge direction of the exhaust gas (within the zone enclosed by the dotted line indicated by A in the drawing).

Therefore, in a configuration of the type illustrated in FIG. 3, high-temperature exhaust gas discharged from the discharge orifice 3a of the exhaust connection pipe 3 does not make direct contact with the evaporation tube 8, and flows in around the evaporation tube 8 as shown by the arrow B, so it does not heat the evaporation tube 8 only from the surface of one side which faces the discharge orifice 3a of the exhaust connection pipe 3, but rather, it is able to efficiently heat from the entire outer periphery of the evaporation tube 8.

It should be noted that in the example shown in FIG. 3 (a), the open end of the discharge orifice 3a is formed facing a direction normal to the lengthwise direction of the exhaust connection pipe 3, but in the examples shown in FIGS. 3 (b) and 3 (c), the open end of the discharge orifice 3a is formed facing a direction diagonal to the lengthwise direction of the exhaust connection pipe 3, so that the front end of the exhaust connection pipe 3 which protrudes into the exhaust manifold 6 does not inhibit the stream of exhaust gas from flowing around the evaporation tube 8. In addition, the exhaust connection pipe 3 is disposed so that the forward end of the diagonally cut open end is positioned on the inner circumference side of the exhaust manifold 6. In the example shown in FIG. 3, the open end of the discharge orifice 3a is cut at 45°, for example.

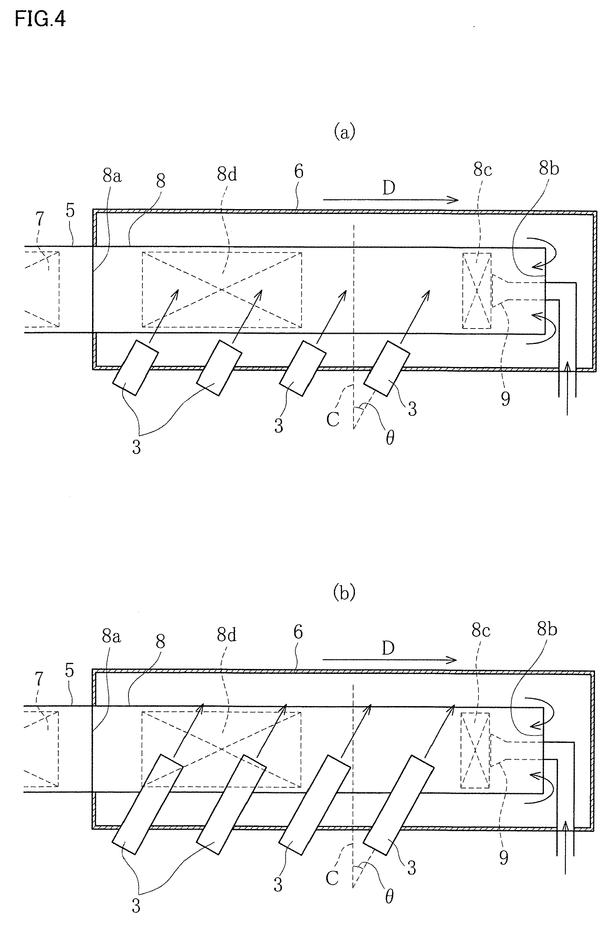

FIG. 4 is a drawing illustrating another example in which the exhaust connection pipes 3 are respectively arranged in a direction inclined toward the open end 8b of the evaporation tube 8, from a direction perpendicular to the lengthwise direction of the evaporation tube 8 (the direction indicated by the line C). FIG. 4 is a sectional view only of the exhaust manifold 6 in a horizontal direction at a position in the center taken in a vertical direction.

In the example illustrated in FIG. 4 (a), the exhaust connection pipes 3 are positioned on a side of the evaporation tube 8, and disposed at an angle θ, which is 30°, for example, formed by the installation orientation of the exhaust connection pipes 3 with respect to a direction normal to the lengthwise direction of the evaporation tube 8 (the direction indicated by the line C).

Therefore, in a configuration of the type illustrated in FIG. 4 (a), high-temperature exhaust gas discharged from the discharge orifices 3a of the exhaust connection pipes 3 flows toward the open end 8b to the outside of the evaporation tube 8 within the exhaust manifold 6 in a direction indicated by an arrow D in the drawing, with the advantageous result that it heats the entire length of the evaporation tube 8.

In addition, if a configuration is employed such that the exhaust connection pipes 3 are arranged in a direction inclined toward the open end 8b of the evaporation tube 8, the resulting configuration combines the case in which the discharge orifices of the exhaust connection pipes 3 are disposed upwards towards the evaporation tube 8, and the case in which the exhaust connection pipes 3 are arranged so that they extend up to an upward position within the evaporation tube 8, so that the exhaust connection pipes 3 are arranged facing a direction in which the evaporation tube 8 is not present within a zone in which they are extended in the discharge direction of the exhaust gas, as illustrated in FIG. 4 (b).

Therefore, in a configuration of the type illustrated in FIG. 4 (b), when an exhaust valve provided to the exhaust port 2a of the engine 2 is opened, the high-temperature gas discharged from the exhaust connection pipes 3 into the exhaust manifold 6 is directed towards the open end 8b while tracing out a helical shape on the outer periphery of the evaporation tube 8, with the result that the entire circumference and the entire length of the evaporation tube 8 can be efficiently heated, and in addition, the flow of the exhaust gas within the exhaust manifold 6 is advantageous.

As described above, the exhaust gas emission purifying device according to the present invention is designed to conserve space to a greater extent than in prior art devices, because the exhaust gas emission purifying device according to the present invention is provided with a denitration catalyst apparatus disposed in the exhaust passageway upstream of the turbine of the turbocharger , and employs a configuration in which an evaporation tube having one end connected to an exhaust passageway inside of the exhaust manifold and the other end opens into the exhaust manifold, and a nozzle capable of spraying an aqueous solution of a reducing agent or the like into the exhaust gas as it passes through the evaporation tube. In addition, as a result of employing the above-described configuration, the exhaust gas emission purifying device according to the present invention is able to prevent a decrease in catalytic performance due to the adsorption of intermediates, even if the fuel contains a large quantity of sulfur compounds, because the evaporation tube does not decrease in temperature.

The present invention is not limited to the above-described examples, and the embodiment may, of course, be advantageously modified within the scope of the claims.

For example, in the configuration of the example described above, denitration treatment was carried out by feeding exhaust gas into the ordinary denitration catalyst apparatus 7 after being discharged from the exhaust connection pipes 3 into the exhaust manifold 6, but, as shown in FIG. 5, a configuration may be employed in which there is provided a bypass conduit 14 which discharges exhaust gas directly into the turbine 4a of the turbocharger without going through the denitration catalyst apparatus 7 when denitration treatment with an SCR catalyst is not necessary, and in which there is provided a switching valve 13 for switching the routing of the exhaust gas.

Moreover, the above-described example disclosed a configuration in which the aqueous urea 9a was sprayed as a reducing agent precursor from the nozzle 9 into the exhaust gas within the evaporation tube 8, but the components of the reducing agent precursor are not limited thereto. An aqueous solution mixture of high-concentration urea and low-concentration ammonia and/or aqueous ammonia may also be used.

According to the present invention, because the evaporation tube 8 inside the exhaust manifold 6 is heated to an elevated temperature by a high-temperature exhaust gas immediately after being discharged from the exhaust connection pipes 3, an aqueous solution containing a reducing agent and/or a reducing agent precursor sprayed from the nozzle 9 is reliably vaporized or hydrolyzed while passing through the evaporation tube 8, regardless of what kind of components are used. In addition, a reducing agent in a vaporized state such as ammonia gas formed in the evaporation tube 8 can be delivered to the denitration catalyst apparatus 7 together with the exhaust gas containing NOx, while maintaining a high-temperature state.

Moreover, the above-described example disclosed a case in which the nozzle 9 was installed in the vicinity of the open end 8b of the evaporation tube 8. However, the installation position of the nozzle 9 is not is not limited thereto, and it may be mounted in the center of the evaporation tube 8, for example.

Nonetheless, the nozzle 9 is most advantageously installed in the vicinity of the open end 8b of the evaporation tube 8, because that makes it possible to ensure a lengthy residence time for the sprayed aqueous urea 9a while it passes through the high-temperature evaporation tube 8. Also, if the nozzle 9 is installed in the vicinity of the open end 8b of the evaporation tube 8, it is easy to ensure that there is space to install the flow regulator 8c and static mixer 8d.

### POSSIBLE INDUSTRIAL USE

The exhaust gas emission purifying device according to the present invention can be used in exhaust systems not only in diesel engines for ships, but also for automotive diesel engines.

### EXPLANATION OF THE REFERENCE NUMERALS

1 Exhaust gas emission purifying device
2 Engine
2a Exhaust port
3 Exhaust connection pipe
4 Turbocharger
4a Turbine
5 Exhaust passageway
6 Exhaust manifold
7 Denitration catalyst apparatus
8 Evaporation tube
8a One end
8b Open end
8c Flow regulator
8d Static mixer
9 Nozzle
9a Aqueous urea

## Claims

1. An exhaust gas emission purifying device (1) comprising:
an exhaust manifold (6) which collects an exhaust gas discharged from exhaust connection pipes (3) connected to exhaust ports (2a) of an engine (2), and which leads the exhaust gas into an exhaust passageway (5) upstream of a turbine (4a) of a turbocharger (4);
a denitration catalyst apparatus (7) disposed in the exhaust passageway (5);
an evaporation tube (8) provided inside of the exhaust manifold (6), the evaporation tube (8) having one end (8a) connected to the exhaust passageway (5) and the other end (8b) opening into the exhaust manifold (6); and
a nozzle (9) that sprays an aqueous solution containing at least one of a reducing agent and a reducing agent precursor into the exhaust gas as it passes through the evaporation tube (8), **characterized in that** the evaporation tube (8) comprises:
a flow regulator (8c) configured to regulate the flow of exhaust gas within the evaporation tube (8); and
a static mixer (8d).

2. The exhaust gas emission purifying device according to claim 1, wherein the exhaust connection pipes (3) are arranged facing a direction in which the evaporation tube (8) is not present within a zone in which the exhaust connection pipes (3) are extended in the discharge direction of the exhaust gas.

3. The exhaust gas emission purifying device according to claim 1 or claim 2, wherein the exhaust connection pipes (3) are arranged in a direction inclined toward the open end side of the evaporation tube (8), from a direction perpendicular to the lengthwise direction of the evaporation tube (8).

## Patentansprüche

1. Abgasemissionsreinigungsvorrichtung umfassend:
einen Abgaskrümmer (6), der ein Abgas sammelt, das von Abgasverbindungsleitungen (3) ausgestoßen wird, die mit Abgasöffnungen (2a) eines Motors (2) verbunden sind, und der das Abgas in einen Abgasdurchgang (5) stromaufwärts einer Turbine (4a) eines Turboladers (4) führt,
eine Denitrierungskatalysatorvorrichtung (7), die in dem Abgasdurchgang (5) angeordnet ist,
ein Verdampfungsrohr (8), das innerhalb des Abgaskrümmers (6) vorgesehen ist, wobei das Verdampfungsrohr (8) ein mit dem Abgasdurchgang (5) verbundenes erstes Ende (8a) aufweist, und das andere Ende (8b) in den Abgaskrümmer (6) hinein öffnet, und
eine Düse (9), die eine wässrige Lösung, die mindestens ein Reduktionsmittel oder einen Reduktionsmittelausgangsstoff enthält, in das Abgas einsprüht, während es durch das Verdampfungsrohr (8) hindurchströmt, **dadurch gekennzeichnet, dass** das Verdampfungsrohr (8) umfasst:
einen Durchflussregler (8c), der dazu eingerichtet ist, die Strömung des Abgases in dem Verdampfungsrohr (8) zu regulieren, und
einen statischen Mischer (8d).

2. Abgasemissionsreinigungsvorrichtung nach Anspruch 1, wobei die Abgasverbindungsleitungen (3) so angeordnet sind, dass sie in eine Richtung weisen, in der das Verdampfungsrohr (8) innerhalb einer Zone, in der die Abgasverbindungsleitungen (3) in der Ausstoßrichtung des Abgases verlängert sind, nicht vorhanden ist.

3. Abgasemissionsreinigungsvorrichtung nach Anspruch 1 oder Anspruch 2, wobei die Abgasverbindungsrohre (3) in einer Richtung angeordnet sind, die in Richtung der offenen Endseite des Verdampfungsrohres (8), aus einer Richtung, die senkrecht zur Längsrichtung des Verdampfungsrohrs (8) ist, geneigt sind.

## Revendications

1. Dispositif de purification d'émission de gaz d'échappement (1) comprenant :
un collecteur d'échappement (6) qui collecte un gaz d'échappement évacué de tuyaux de liaison d'échappement (3) reliés à des orifices d'échappement (2a) d'un moteur (2) et qui mène le gaz d'échappement dans un passage d'échappement (5) en amont d'une turbine (4a) d'un turbocompresseur (4) ;
un appareil catalyseur de dénitration (7) disposé dans le passage d'échappement (5) ;
un tube d'évaporation (8) prévu à l'intérieur du collecteur d'échappement (6), le tube d'évaporation (8) présentant une extrémité (8a) reliée au passage d'échappement (5) et l'autre extrémité (8b) ouvrant dans le collecteur d'échappement (6) ; et
une buse (9) qui pulvérise une solution aqueuse contenant au moins un d'un agent de réduction et d'un précurseur d'agent de réduction dans le gaz d'échappement lors du passage par le tube d'évaporation (8), **caractérisé en ce que** le tube d'évaporation (8) comprend :
un régulateur de flux (8c) configuré pour réguler le flux de gaz d'échappement dans le tube d'évaporation (8) ; et
un mélangeur statique (8d).

2. Dispositif de purification d'émission de gaz d'échappement selon la revendication 1, dans lequel les tuyaux de liaison d'échappement (3) sont agencés de manière à faire face à une direction, dans laquelle le tube d'évaporation (8) n'est pas présent dans une zone dans laquelle les tuyaux de liaison d'échappement (3) sont étendus dans la direction d'évacuation du gaz d'échappement.

3. Dispositif de purification d'émission de gaz d'échappement selon la revendication 1 ou la revendication 2, dans lequel les tuyaux de liaison d'échappement (3) sont agencés dans une direction inclinée vers le côté extrémité ouverte du tube d'évaporation (8) depuis une direction perpendiculaire à la direction longitudinale du tube d'évaporation (8).
